# DEMANDE DE BREVET EUROPEEN

(11) **EP 2 352 177 A1**
(43) Date de publication de la demande: **03.08.2011**
(21) Numéro de dépôt: 11305082.7
(22) Date de dépôt: 27.01.2011
(51) Int. Cl.: H01L 31/042, F24J 2/52

(54) **Dispositif de fixation de panneaux solaires sur une toiture**

(30) Priorité: 29.01.2010 FR 1050654
(71) Demandeur: Heliovolt (Société à Responsabilité Limitée), 67240 Schirrhoffen (FR)
(72) Inventeur: Rudert, Eberhard, 67240, SCHIRRHOFFEN (FR)
(74) Mandataire: Nuss, Pierre

(57) **Abrégé**

La présente invention a pour objet un dispositif de fixation d'un générateur photovoltaïque de type panneau (P) solaire ainsi qu'une toiture équipée d'un tel dispositif.

Le dispositif selon l'invention est **caractérisée en ce qu**'il est essentiellement constitué par au moins deux poutres profilées (1), leurs faces inférieures munies d'une nervure ou rainure inférieure, d'au moins un élément de fixation (4) desdites poutres profilées (1) sur le lattis (L) ou un chevron (C), leurs faces supérieures étant munies d'au moins une nervure ou rainure supérieure munie d'au moins un élément de fixation et/ou d'espacement (7) du ou des panneaux (P), leurs faces latérales gauche et droite étant munies d'une nervure ou rainure latérale gauche et droite munie chacune d'au moins une tôle d'étanchéité gauche (12), respectivement droite (13), s'étendant dans un plan sensiblement parallèle à la surface de capture de la lumière par le ou lesdits panneaux (P).

## Description

La présente invention concerne le domaine des générateurs photovoltaïques, plus particulièrement un dispositif fixation pour générateurs photovoltaïques et a pour objet un dispositif de fixation d'un ou de plusieurs panneaux solaires sur une toiture d'un bâtiment.

Un tel dispositif permet l'intégration totale de modules photovoltaïques sur la toiture d'un bâtiment quelconque facilitant ainsi n'importe quel type d'installation.

Les systèmes d'intégration actuels sont en général définis pour un certain type de panneaux. Ils sont généralement difficiles à mettre en oeuvre et ne s'adaptent pas à n'importe quelles situations.

La présente invention a pour but de pallier au moins certaines des limitations de l'état de la technique visées ci-dessus.

Elle permet notamment de faciliter l'intégration dans la toiture de tous types de structures et de modules avec une parfaite étanchéité en proposant une solution simple, durable et polyvalente puisqu'elle se compose essentiellement de rails en aluminium, de tôles ainsi que de d'éléments de visserie classiques.

La présente invention a donc pour objet un dispositif de fixation d'un ou de plusieurs panneaux solaires de forme essentiellement parallélépipédique rectangle sur une charpente de toiture d'un édifice, en particulier sur les liteaux ou les chevrons de cette charpente, **caractérisé en ce qu'**il est essentiellement constitué par au moins deux poutres profilées de sections globalement carrées ou rectangulaires, leurs faces inférieures étant munies chacune d'une nervure ou rainure inférieure s'étendant sur toute la longueur de la poutre profilée et munie chacune d'au moins un élément de fixation desdites poutres profilées sur lesdits liteaux ou chevrons, leurs faces supérieures étant munies chacune d'au moins une nervure ou rainure supérieure s'étendant sur toute la longueur de la poutre profilée et munie chacune d'au moins un élément de fixation et/ou d'espacement du ou des panneaux reposant sur lesdites poutres profilées, leurs faces latérales gauche et droite étant munies chacune d'une nervure ou rainure latérale gauche et droite correspondantes s'étendant sur toute la longueur de la poutre profilée et pouvant être munie chacune d'au moins une tôle d'étanchéité gauche, respectivement droite, s'étendant dans un plan sensiblement parallèle à la surface de couverture de la toiture ou de la surface de capture de la lumière par le ou lesdits panneaux.

Elle a également pour objet une toiture **caractérisée en ce qu'**elle comprend au moins un dispositif selon l'invention.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
La figure 1 est une vue schématique simplifiée de dessus montrant un panneau solaire fixé sur un dispositif selon l'invention ;
Les figures 2 sont des vues en coupe simplifiées et à une échelle différente, d'une forme de section de profilé particulier d'une poutre profilée du dispositif selon l'invention (figure 2A), d'un premier mode de réalisation d'un dispositif selon l'invention fixé sur des chevrons d'une toiture (figure 2B), et d'un second mode de réalisation d'un dispositif selon l'invention (figure 2C) ;
La figure 3 est une vue en coupe simplifiée d'une variante de la forme de section d'un autre profilé d'une poutre profilée du dispositif selon l'invention et d'un second mode de réalisation d'un dispositif selon l'invention fixé sur des liteaux d'une toiture ; et
La figure 4 est une vue partielle, en perspective, à une échelle différente d'une extrémité du dispositif selon la figure 3.

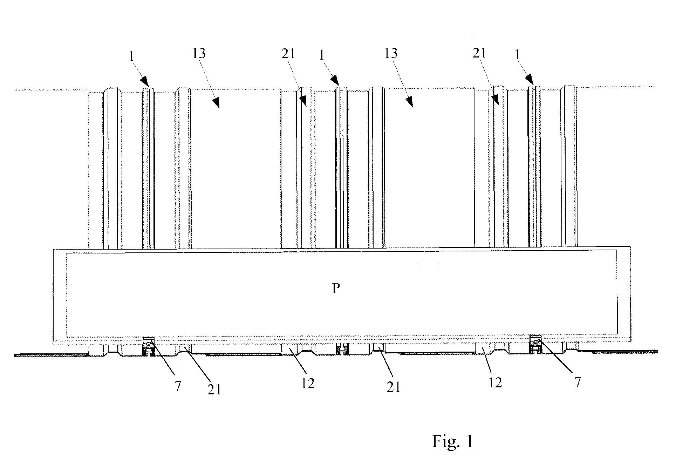

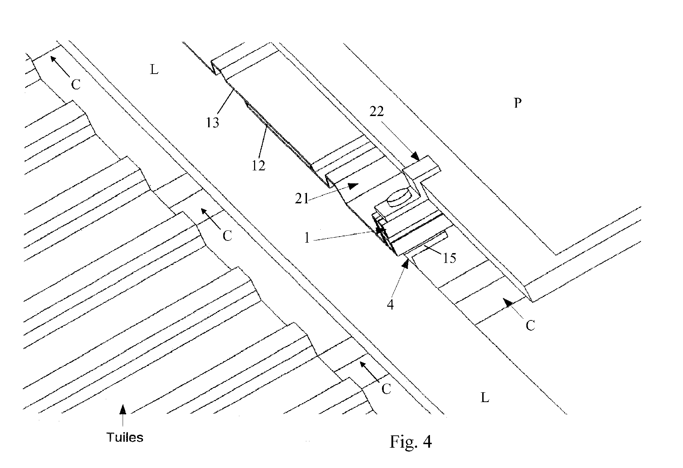

Comme on peut le voir sur les figures 1 à 4, le dispositif de fixation d'un ou de plusieurs panneaux P solaires de forme essentiellement parallélépipédique rectangle sur une charpente de toiture d'un édifice, en particulier sur les liteaux L ou chevrons C de cette charpente selon l'invention est **caractérisé en ce qu'**il est essentiellement constitué par au moins deux poutres profilées 1 de sections globalement carrées ou rectangulaires, leurs faces inférieures 2 étant munies chacune d'une nervure ou rainure inférieure 3 s'étendant sur toute la longueur de la poutre profilée 1 et munie chacune d'au moins un élément de fixation 4 desdites poutres profilées 1 sur lesdits liteaux (ou lattis) L ou chevrons C, leurs faces supérieures 5 étant munies chacune d'au moins une nervure ou rainure supérieure 6 s'étendant sur toute la longueur de la poutre profilée 1 et munie chacune d'au moins un élément de fixation et/ou d'espacement 7 du ou des panneaux P reposant sur lesdites poutres profilées 1, leurs faces latérales gauche 8 et droite 9 étant munies chacune d'une nervure ou rainure latérale gauche 10 et droite 11 correspondantes s'étendant sur toute la longueur de la poutre profilée 1 et étant munie chacune d'au moins une tôle d'étanchéité gauche 12, respectivement droite 13, s'étendant dans un plan sensiblement parallèle à la surface de couverture de la toiture ou de la surface de capture de la lumière par le ou les panneaux P.

Lesdites poutres profilées 1 sont de préférence des rails en aluminium, de longueur définie par l'utilisateur, se fixant directement sur la structure du bâtiment (exemple : une charpente, structure acier...). Il est possible de les fixer verticalement à l'endroit le plus avantageux, sans rajout d'éléments sur la structure. La largeur libre laissée entre chaque poutre profilée 1 n'a pas forcément besoin d'être à la dimension des panneaux P photovoltaïques qui peuvent se présenter avec ou sans cadre.

Une fois les poutres profilées 1 installées (de manière conventionnelle bien connue de l'homme du métier essentiellement par l'intermédiaire des éléments de fixation 4), les tôles d'étanchéité gauche 12 et droite 13 prévues à cet effet viennent s'imbriquer les unes dans les autres entre lesdites poutres profilées 1 voisines et assurent une étanchéité parfaite contre les intempéries.

L'installation desdites tôles 12, 13 est donc relativement simple puisqu'elle ne nécessite ni découpage ni perçage ou quelque autre action exigeant l'emploi d'outils. Elles sont simplement emboîtées et posées sur leur emplacement. Il n'y a pas non plus besoin de joints en caoutchouc ou de rails en U, les panneaux P étant côte à côte.

Avantageusement, l'utilisation de poutres profilées 1 (ou rails) en aluminium permet une adaptation très polyvalente avec la possibilité de prévoir, sur les faces inférieure 2 et/ou supérieure 5 et/ou latérales 8, 9 des nervures ou rainures correspondantes (inférieure 3, supérieure 6, latérale gauche 8, latérale droite 9) et éventuellement des orifices ou trous de tailles différentes sur les quatre faces.

Le dispositif selon l'invention est parfaitement polyvalent et conçu pour s'adapter sur des toitures de hangar en tôles, bâtiments industriels, entrepôts, maisons individuelles ...

Il peut être facilement et directement vissé sur une charpente en bois, à l'aide de visserie classiques ou d'équerres, par exemple sur les chevrons C. On profite ainsi de la sous-structure sans avoir à effectuer des modifications importantes sur cette dernière.

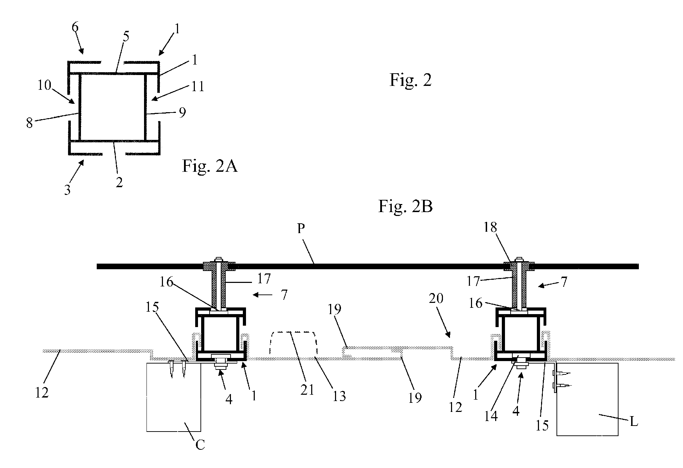

Grâce à la vue de la figure 2B, on peut voir que le dispositif selon l'invention peut également être monté de sorte que les poutres profilées 1 reposent sur les liteaux L. Elles sont fixées soit directement dessus, soit par l'intermédiaire des chevrons C. La fixation se fait grâce au dispositif de fixation 4, par exemple réalisé comme on peut le voir sous la forme d'une équerre 15 collaborant avec un écrou/boulon introduit déplaçable et fixable dans la nervure ou rainure inférieure 3 de la poutre profilée 1.

Selon une caractéristique économiquement avantageuse, les poutres profilées 1 sont chacune de section globalement carrée. Bien entendu, d'autres sections similaires peuvent également convenir (rectangulaire, en forme de trapèze...). La figure 2A montre un exemple de section carrée, par exemple de 40 mm de côté, la largeur de l'ouverture de la nervure ou rainure inférieure 3 ou supérieure 6 pouvant, par exemple, être de 10 mm dans ce cas.

Une telle section carrée permet d'obtenir un encombrement et une rigidité optimale pour un coût de revient le plus avantageux. Il existe dans le commerce de nombreux profilés du type tel que décrit dans la présente demande, notamment en aluminium, et l'homme du métier pourra se procurer aisément le type de profilé qui correspond le mieux à ses besoins pour réaliser l'invention sans qu'il soit nécessaire d'entrer plus en détail à ce sujet.

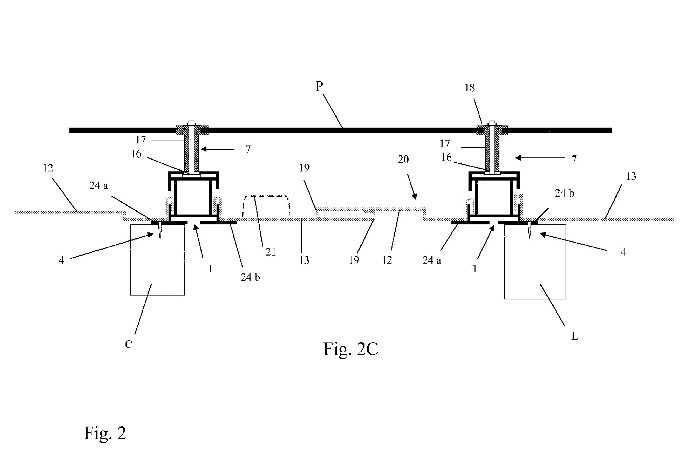

Comme on peut le voir à la figure 2C, les faces inférieures 2 des poutres profilées 1 peuvent être munies chacune d'une nervure ou rainure inférieure 3 dont la structure se prolonge, au niveau de son coin inférieur externe, d'une ailette latérale de support gauche 24a et d'une ailette latérale de support droite 24b, les surfaces horizontales desdites ailettes 24a, 24b s'étendant sur toute la longueur de la poutre profilée 1 dans un plan sensiblement parallèle à la surface de couverture de la toiture ou de la surface de capture de la lumière par le ou les panneaux P, ladite ailette gauche 24a de la nervure ou rainure inférieure 3 étant pourvue d'un élément de fixation 4 réalisé sous la forme d'un moyen de solidarisation de ladite poutre profilée 1 avec le chevron C et ladite ailette droite 24b de l'autre nervure ou rainure inférieure 3 étant pourvue d'un élément de fixation 4 réalisé sous la forme d'un moyen de solidarisation de ladite poutre profilée 1 avec le liteau L.

Lesdites ailettes 24a, 24b, se présentent avantageusement sous la forme de surfaces d'appui sur lesquelles les tôles d'étanchéité 12, 13 reposent. Ces ailettes 24a, 24b permettent de renforcer l'épaulement constitué par la partie 15 et d'améliorer la stabilité de la poutre profilée 1. Elles peuvent être réalisées d'un seul tenant avec la poutre profilée 1 ou rapportées sur celle-ci, par exemple par soudure.

Selon une autre caractéristique du second mode de réalisation représenté à la figure 2C, les ailettes 24a, 24b, peuvent être pourvues chacune d'un élément de fixation 4 qui peut être une vis, cheville ou analogue traversant lesdites ailettes latérales de support 24a, 24b pour venir en prise avec le chevron C ou le liteau L.

D'autres éléments de fixation 4 plus sophistiqués, tels que des liaisons par collage, soudure, rivetage, etc... peuvent également convenir. L'assemblage ou la fixation desdits éléments peut être effectués de façon ponctuelle ou locale sur toute la longueur des chevrons C ou liteaux L ou juste aux extrémités ou aux endroits critiques de ceux-ci. La liaison peut également s'effectuer de façon continue sur toute la longueur par exemple en cas de collage, en prévoyant de longues bandes ou couches de colle.

Selon une autre caractéristique, chaque nervure ou rainure inférieure 3 présente une section sensiblement en forme de « C » et est munie d'au moins un élément de fixation 4 desdites poutres profilées 1 sur lesdits liteaux ou lattis L ou chevrons C, élément de fixation 4 réalisé sous la forme d'un élément mobile inférieur 14 pouvant coulisser à l'intérieur de ladite nervure ou rainure inférieure 3 en y étant retenu, et prolongé par une partie 15 fixée dans lesdits liteaux ou lattis L ou chevrons C. Comme on le voit sur la figure 2, la partie 15 peut, par exemple, être réalisée sous la forme d'une équerre clouée ou vissée dans le lattis L ou une plaque droite clouée ou vissée dans un chevron C.

Le dispositif selon l'invention est donc encore **caractérisé en ce que** la partie 15 est une équerre fixée dans lesdits liteaux ou lattis L ou lesdits chevrons C.

Selon un autre aspect, le dispositif selon l'invention est encore caractérisé en ce chaque nervure ou rainure supérieure 6 présente une section sensiblement en forme de « C », qui est munie d'au moins un élément de fixation et/ou d'espacement 7 du ou des panneaux P reposant sur lesdites poutres profilées 1 réalisé sous la forme d'un élément mobile supérieur 16 pouvant coulisser à l'intérieur de ladite nervure ou rainure supérieure 6 en y étant retenu, et prolongé par une tige 17 sensiblement perpendiculaire au plan formé par lesdits liteaux ou lattis L ou chevrons C dont l'extrémité opposée à la poutre profilée 1 présente un élément de retenue 18 du ou des panneaux P.

Comme on peut le voir sur la figure 2B, le dispositif selon l'invention est en outre **caractérisé en ce que** la tige 17 est une vis munie à son extrémité opposée à la poutre profilée 1 d'un élément de retenue 18 sous la forme d'un ou de plusieurs crochets ou d'une plaquette auto-fixante.

Selon une autre caractéristique importante, lesdites faces latérales gauche 8 et droite 9 sont munies chacune d'une nervure ou rainure latérale gauche 10 et droite 11 qui présente chacune une section sensiblement en forme de « C » dont la forme coopère avec celle du bord d'extrémité de la au moins une tôle d'étanchéité gauche 12, respectivement droite 13 qui y est insérée lors du montage (cf. figure 1 ou 2B).

Comme on peut également le voir sur la figure 2B, le dispositif selon l'invention est **caractérisé en ce que** la tôle d'étanchéité gauche 12 et/ou droite 13 présente, à son extrémité libre éloignée de la poutre profilée 1, un bord longitudinal réalisé sous la forme d'un rebord 19.

Ce rebord créée une portion verticale de profilé dirigée soit vers le haut, soit vers le bas comme le montre la figure 2B. L'extrémité de cette portion verticale est, à son tour, prolongée par une portion horizontale ou sensiblement horizontale supplémentaire formant ainsi un rebord dont la section a également une forme de crochet ou de « C ».

De manière préférée, et comme schématiquement représenté à la figure 2B, la surépaisseur créée par le rebord 19 est compensée par un dénivelé intermédiaire 20 obtenu par pliage local de ladite tôle 12, 13.

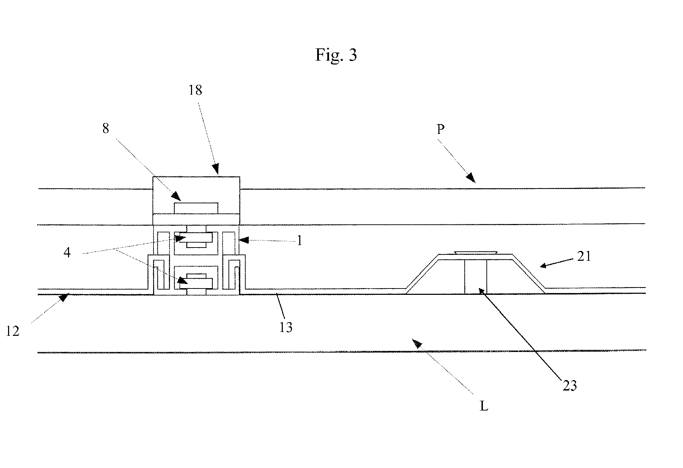

Selon un autre mode de réalisation, évoqué en pointillés sur la figure 2B ou comme on peut encore le voir sur la figure 3 qui représente un dispositif selon l'invention analogue à ceux précédemment décrits (avec cependant une poutre profilée 1 similaire mais de section rectangulaire), la tôle d'étanchéité gauche 12 et/ou droite 13 présente, dans sa partie centrale entre la poutre profilée 1 et son bord d'extrémité au moins un bossage 21 obtenu par pliage ou déformation localisée, dont les dimensions permettent une fixation de ladite tôle 12, 13 sur un élément de ladite charpente de toiture.

Cette fixation sur un chevron C ou un liteau L peut se faire de façon habituelle, par exemple en prévoyant des orifices dans ladite tôle d'étanchéité 12, 13 et/ou dans la poutre profilée 1 coopérant avec des moyens de fixation correspondants (notamment de type vis/écrou) ou en fixant la tôle par tout autre moyen de fixation 23 adapté (cf. fig. 3).

Avantageusement, on pourra prévoir qu'une partie ou tout de la surépaisseur créée par le rebord 19 précité est compensée par l'un ou l'ensemble des bossages 21.

Selon une autre caractéristique, le dispositif selon l'invention est encore **caractérisé en ce qu'**entre deux poutres profilés 1 consécutives les tôles d'étanchéité gauche 12 et droite 13 s'étendent dans le plan de la surface de la charpente en se superposant, la surface de superposition étant de préférence la plus réduite possible.

Comme on le voit clairement sur la figure 2B précitée le recouvrement des deux tôles susvisées 12, 13 de l'exemple représenté ne fait sur une portion relativement importante ce qui peut être évité en écartant davantage lesdites poutres profilées 1 et/ou en choisissant desdites tôles 12, 13 aux dimensions plus réduites et donc plus adaptées.

Lesdites tôles 12, 13 peuvent s'adapter à un écartement entre chaque rail ou poutre profilée 1 de, par exemple, 560 mm à 800 mm.

Leur aptitude à la superposition et leur auto-emboîtement évite l'utilisation de machines-outils. Leur blocage se fait naturellement grâce à leur structure adaptée.

Avantageusement, le dispositif selon l'invention est également **caractérisé en ce qu'**au moins une des poutres profilés 1 présente à l'une de ses extrémités vers un élément d'arrêt 22 bloquant le panneau P en position pour éviter une chute depuis ladite toiture vers le sol.

Enfin, la présente invention a encore pour objet une toiture **caractérisée en ce qu**'elle comprend au moins un dispositif selon l'une quelconque des revendications précédentes. On peut ainsi couvrir une grande surface de toit en juxtaposant, à intervalles réguliers des poutres profilées 1 selon l'invention sur lesquelles on fait reposer et on fixe les différents modules ou panneaux P solaires.

Le dispositif selon l'invention est particulièrement destiné à des toitures dont la pente se situe entre environ 10° et 80°.

En résumé, le dispositif selon l'invention est essentiellement caractérisé par des poutres profilés 1 ou rails à quatre faces, rainurés et éventuellement troués s'adaptant sur la toiture d'un bâtiment quelconque, qui maintiennent des tôles auto-emboîtables couvrant ainsi le toit pour assurer son étanchéité.

Avantageusement, le dispositif selon l'invention ne nécessite pas de respecter à tout prix la dimension des modules photovoltaïques puisque ceux-ci peuvent être posés directement sur lesdites poutres profilés 1 et fixés sur le côté, par exemple, par une clavette. La rainure ou nervure ad hoc du rail permet de positionner cette clavette à n'importe quel endroit sur ladite poutre profilée 1.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention défini par les revendications.

## Revendications

1. Dispositif de fixation d'un ou de plusieurs panneaux (P) solaires de forme essentiellement parallélépipédique rectangle sur une charpente de toiture d'un édifice, en particulier sur les liteaux (L) ou les chevrons (C) de cette charpente, **caractérisé en ce qu'**il est essentiellement constitué par au moins deux poutres profilées (1) de sections globalement carrées ou rectangulaires, leurs faces inférieures (2) étant munies chacune d'une nervure ou rainure inférieure (3) s'étendant sur toute la longueur de la poutre profilée (1) et munie chacune d'au moins un élément de fixation (4) desdites poutres profilées (1) sur lesdits liteaux ou lattis (L), leurs faces supérieures (5) étant munies chacune d'au moins une nervure ou rainure supérieure (6) s'étendant sur toute la longueur de la poutre profilée (1) et munie chacune d'au moins un élément de fixation et/ou d'espacement (7) du ou des panneaux (P) reposant sur lesdites poutres profilées (1), leurs faces latérales gauche (8) et droite (9) étant munies chacune d'une nervure ou rainure latérale gauche (10) et droite (11) correspondantes s'étendant sur toute la longueur de la poutre profilée (1) et étant munie chacune d'au moins une tôle d'étanchéité gauche (12), respectivement droite (13), s'étendant dans un plan sensiblement parallèle à la surface de couverture de la toiture ou de la surface de capture de la lumière par le ou les panneaux (P).

2. Dispositif selon la revendication 1, **caractérisé en ce que** lesdites faces inférieures (2) sont munies chacune d'une nervure ou rainure inférieure (3) dont la structure se prolonge, au niveau de son coin inférieur externe, d'une ailette latérale de support gauche (24a) et d'une ailette latérale de support droite (24b), les surfaces horizontales desdites ailettes (24a, 24b) s'étendant sur toute la longueur de la poutre profilée (1) dans un plan sensiblement parallèle à la surface de couverture de la toiture ou de la surface de capture de la lumière par le ou les panneaux (P), ladite ailette gauche (24a) de la nervure ou rainure inférieure (3) étant pourvue d'un élément de fixation (4) réalisé sous la forme d'un moyen de solidarisation de ladite poutre profilée (1) avec le chevron (C) et ladite ailette droite (24b) de l'autre nervure ou rainure inférieure (3) étant pourvue d'un élément de fixation (4) réalisé sous la forme d'un moyen de solidarisation de ladite poutre profilée (1) avec le liteau (L).

3. Dispositif selon la revendication 2, **caractérisé en ce que** l'élément de fixation (4) est une vis, cheville ou analogue traversant l'ailette latérale de support (24a, 24b) pour venir en prise avec le chevron (C) ou le liteau (L).

4. Dispositif selon la revendication 1, **caractérisé en ce que** chaque nervure ou rainure inférieure (3) présente une section sensiblement en forme de « C » et qui est munie d'au moins un élément de fixation (4) desdites poutres profilées (1) sur lesdits liteaux (L) ou lesdits chevrons (C), élément de fixation (4) réalisé sous la forme d'un élément mobile inférieur (14) pouvant coulisser à l'intérieur de ladite nervure ou rainure inférieure (3) en y étant retenu, et prolongé par une partie (15) fixée dans lesdits liteaux (L) ou chevrons (C).

5. Dispositif selon la revendication 4, **caractérisé en ce que** la partie (15) est une équerre fixée dans lesdits liteaux (L) ou chevrons (C).

6. Dispositif selon l'une quelconque des revendications précédentes, caractérisé en ce chaque nervure ou rainure supérieure (6) présente une section sensiblement en forme de « C » et qui est munie d'au moins un élément de fixation et/ou d'espacement (7) du ou des panneaux (P) reposant sur lesdites poutres profilées (1) réalisé sous la forme d'un élément mobile supérieur (16) pouvant coulisser à l'intérieur de ladite nervure ou rainure supérieure (6) en y étant retenu, et prolongé par une tige (17) sensiblement perpendiculaire au plan formé par lesdits liteaux (L) ou chevrons (C) dont l'extrémité opposée à la poutre profilée (1) présente un élément de retenue (18) du ou des panneaux (P).

7. Dispositif selon la revendication 6, **caractérisé en ce que** la tige (17) est une vis munie à son extrémité opposée à la poutre profilée (1) d'un élément de retenue (18) sous la forme d'un ou de plusieurs crochets ou d'une plaquette auto-fixante.

8. Dispositif selon l'une quelconque des revendications précédentes, **caractérisé en ce que** lesdites faces latérales gauche (8) et droite (9) sont munies chacune d'une nervure ou rainure latérale gauche (10) et droite (11) présentent chacune une section sensiblement en forme de « C » dont la forme coopère avec celle du bord d'extrémité de la au moins une tôle d'étanchéité gauche (12), respectivement droite (13) qui y est insérée lors du montage.

9. Dispositif selon la revendication 8, **caractérisée en ce que** la tôle d'étanchéité gauche (12) et/ou droite (13) présente, à son extrémité libre éloignée de la poutre profilée (1), un bord longitudinal réalisé sous la forme d'un rebord (19).

10. Dispositif selon la revendication 9, **caractérisé en ce que** la surépaisseur créée par le rebord (19) est compensée par un dénivelé intermédiaire (20) obtenu par pliage local de ladite tôle (12, 13).

11. Dispositif selon la revendication 8 ou 9, en ce que la tôle d'étanchéité gauche (12) et/ou droite (13) présente, dans sa partie centrale entre la poutre profilée (1) et son bord d'extrémité au moins un bossage (21) obtenu par pliage ou déformation localisée, dont les dimensions permettent une fixation de ladite tôle sur un élément de ladite charpente de toiture.

12. Dispositif selon la revendication 11, **caractérisé en ce qu'**une partie ou tout de la surépaisseur créée par le rebord (19) est compensée par l'un ou l'ensemble des bossages (21).

13. Dispositif selon l'une quelconque des revendications précédentes, **caractérisée en ce qu**'entre deux poutres profilés (1) consécutives les tôles d'étanchéité gauche (12) et droite (13) s'étendent dans le plan de la surface de la charpente en se superposant, la surface de superposition étant de préférence la plus réduite possible.

14. Dispositif selon l'une quelconque des revendications précédentes, **caractérisé en ce qu'**au moins une des poutres profilés (1) présente à l'une de ses extrémités vers un élément d'arrêt (22) bloquant le panneau (P) en position pour éviter une chute depuis ladite toiture vers le sol.

15. Toiture **caractérisée en ce qu**'elle comprend au moins un dispositif selon l'une quelconque des revendications précédentes.
